# EUROPÄISCHE PATENTSCHRIFT

(11) **EP 2 664 814 B1**
(45) Veröffentlichungstag und Bekanntmachung des Hinweises auf die Patenterteilung: **20.07.2016**
(21) Anmeldenummer: 13001201.6
(22) Anmeldetag: 11.03.2013
(51) Int. Cl.: F16D 66/02, F16D 55/226

(54) **Scheibenbremsensystem, insbesondere für Nutzfahrzeuge, sowie Halteeinrichtung für ein Kabel eines solchen Scheibenbremsensystems**
Disc braking system, in particular for commercial vehicles, and holding device for a cable of such a disc braking system
Système de frein à disque, notamment pour véhicules utilitaires, et dispositif de maintien pour un câble d'un tel système de frein à disque

(30) Priorität: 16.05.2012 DE 102012009842
(43) Veröffentlichungstag der Anmeldung: 20.11.2013
(73) Patentinhaber: Wabco Radbremsen GmbH, 68229 Mannheim (DE)
(72) Erfinder: Reddemann, Bernward, 68766 Hockenheim (DE); Kalmbach, Marcel, 74360 Ilsfeld (DE)
(74) Vertreter: Leinweber & Zimmermann

(56) Entgegenhaltungen:
- EP-A1- 0 757 188
- DE-A1-102008 055 860
- GB-A- 2 264 154
- US-A1- 2005 161 290

## Beschreibung

Die Erfindung betrifft ein Scheibenbremsensystem, insbesondere für Nutzfahrzeuge, mit einem eine Bremsscheibe umgreifenden Bremssattel, einer auf einer Seite der Bremsscheibe im Bremssattel angeordneten Zuspanneinrichtung, einer Betätigungseinrichtung, die mittels einer Schraubverbindungseinrichtung auf der Zuspannseite an dem Bremssattel, insbesondere an dessen Ende befestigt ist, einem an einen Verschleißsensor für einen Bremsbelag angeschlossenen Kabel und einer Halteeinrichtung zum Halten des Kabels an dem zuspannseitigen Bereich des Bremssattels.

Mit anderen Worten betrifft die Erfindung ein Scheibenbremsensystem mit einem die Bremsscheibe umgreifenden Bremssattel, in dessen zuspannseitigem Sattelbereich eine Zuspanneinrichtung angeordnet ist, um beidseitig der Bremsscheibe aus Reibbelag und Trägerplatte bestehende Bremsbeläge axial gegen die Bremsscheibe anzudrücken, wobei der zuspannseitige Bremssattelbereich endseitig einen flanschartig ausgebildeten Haltebereich zum Anschrauben einer pneumatisch und / oder elektromechanisch arbeitenden Betätigungseinrichtung aufweist, wobei beispielsweise zwei zur verschraubbaren Befestigung der Betätigungseinrichtung an dem Sattel dienende Muttern zur Bremsscheibe zeigen und wenigstens ein Bremsbelag mit einem elektrischen Verschleißindikator (Sensor) mit einem Kabel ausgestattet ist. EP-A-0 757 188 zeigt z.B. so ein System.

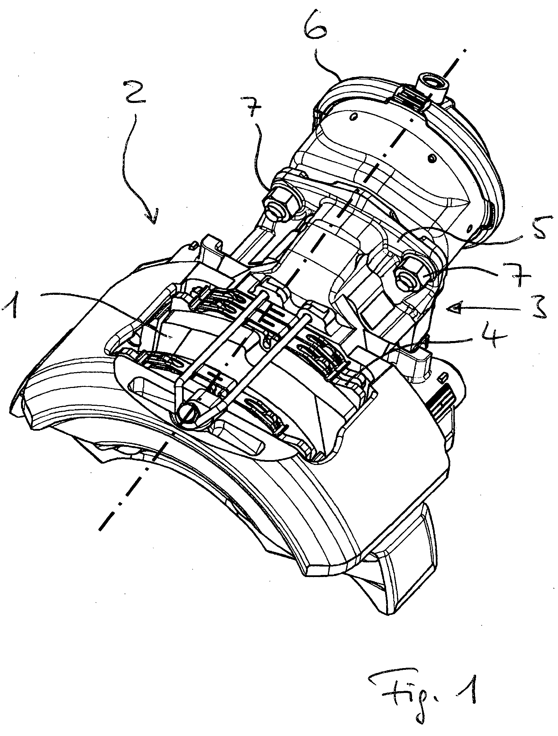

Ein solches Scheibenbremsensystem, wie es aus dem Stand der Technik bekannt ist, ist in Figur 1 dargestellt.

Aus dem Stand der Technik ist bekannt, daß zur Ermittlung vom Bremsbelag - und / oder Bremsscheibenverschleiß wenigstens ein Bremsbelag mit einem Verschleißsensor bestückt wird. Von dem Sensor aus verläuft dann ein Kabel entlang dem zuspannseitigen Bremssattelbereich zu einem eine Schnittstelle bildenden fahrzeugseitigen Anschlußteil, das je nach Fahrzeug- bzw. Kundenspezifikation unterschiedlich ausgeführt und an unterschiedlichen Stellen angeordnet sein kann.

Das Hauptaugenmerk der Erfindung liegt dabei auf der Führung des Kabels entlang der zuspannseitigen Bremssattelkontur in Richtung Betätigungseinrichtung. Es geht also insbesondere um den Sattelbereich vom zuspannseitigen Bremsbelag bis zum Sattelende mit der daran angeschraubten Betätigungseinrichtung.

Damit das bremsseitige Kabel, sei es für den Transport der Bremse zum Kunden, sei es in eingebautem Zustand, nicht lose herumhängt und zerstörungsfrei gehaltert ist, werden herkömmlicherweise Kabelclips oder sogenannte Kabelbinder verwendet. Kabelclips werden in Gehäusebohrungen des Bremssattels eingedrückt. Da das relativ dünnwandige und aus einem Gußwerkstoff hergestellte Sattelgehäuse nicht angebohrt werden darf, müssen separate Gußandickungen ausgeformt werden, um diese Bohrungen einzubringen. In diese Bohrungen wird der Kabelclip reibschlüssig verbracht. Der dafür erforderliche Mehraufwand an Gußmaterial und die Bohrungseinbringung sind unwirtschaftlich. Kabelbinder dagegen sind oft mangels Befestigungsmöglichkeiten nur sehr ungenügend positionierbar, solange nicht wiederum spezielle Materialdurchbrüche geschaffen werden.

Insbesondere dann, wenn Nutzfahrzeugscheibenbremsen erst im Bedarfsfall mit elektrischen Verschleißsensoren nachgerüstet werden, fehlen oftmals die erforderlichen Befestigungsmöglichkeiten am Bremssattel, oder es erfolgt eine unsachgemäße Kabelbefestigung. Damit liegt eine hohe Zerstörungswahrscheinlichkeit vor.

Aus dem Bereich der PKW-Scheibenbremsen mit hydraulischer Betätigung sind oftmals im Bremssattel mechanisch bearbeitet oder gießtechnisch recht aufwendig hergestellte Freiformen usw. bekannt, in denen dann entweder die Kabel direkt oder indirekt über Stopfen usw. gehalten sind. Solche Halterungen zeigen z. B. die DE 39 17 125 A1 und die DE 40 16 273 A1 mit einer in die Bolzenführung des Bremssattels einpreßbaren Abdeckkappe mit integrierter Öse. Wie diese Beispiele zeigen, sind diese Lösungen im Nutzfahrzeugbereich ungeeignet, weil die dazu erforderlichen Ausnehmungen / Freiformen / Bohrungen oder auch andere Formgebungen nachteiligen Einfluß auf die Festigkeit des Bremssattels haben oder sich in exponierten Positionen des Bremssattels gegenüber der Radfelge bzw. nahe liegenden Fahrwerksteilen befinden. Fehlen aber derartige Halterungsbereiche, sind keine sachgerechten Befestigungen oder Nachausrüstungen durchführbar.

Die DE 10 2008 055 860 A1 zeigt ein Nutzfahrzeug-Scheibenbremsensystem, wie es in Figur 1 dargestellt ist. Daran ist allerdings (noch) keine elektrische Verschleißanzeige vorgesehen.

Wie der von der Bremsscheibe abgewandte Bremssattelbereich als Halteflansch beidseitig einer Bremssattelhaube ausgeführt ist und zur Befestigung der Betätigungseinrichtung dient, beschreibt beispielsweise Abschnitt [0033] der DE 10 2008 055 860 A1 unter Bezugnahme auf die dortigen Figuren 1 und 3. Insbesondere ist dem zu entnehmen, daß sich durch den Halteflansch zwei Halteschrauben der Betätigungseinrichtung erstrecken, die von der anderen Flanschseite her mit Muttern verschraubt werden. Diese Muttern zeigen zur Bremsscheibe.

Der Erfindung liegt die Aufgabe zugrunde, das Scheibenbremsensystem der eingangs genannten Art derart weiterzubilden, daß die Halteeinrichtung zum Halten des Kabels an dem zuspannseitigen Bereich des Bremssattels realisiert wird, und zwar ohne Änderung des Scheibenbremsensystems. Insbesondere soll die Halteeinrichtung befestigbar und lösbar sein, variabel an das Scheibenbremsensystem anpaßbar sein und das Kabel derart halten bzw. führen, daß Kontakte mit anderen Fahrzeugteilen, wie beispielsweise der Radfelge, ausgeschlossen sind. Schließlich soll keine radiale Bauraumvergrößerung der Sattelstruktur erforderlich sein. Die Erfindung ist gleichermaßen anzuwenden auf Erstund Nachausrüstungen des Scheibenbremsensystems mit einem Verschleißsensor bzw. einem daran angeschlossenen Kabel.

Erfindungsgemäß wird die gestellte Aufgabe bei einem Scheibenbremsensystem der eingangs genannten Art dadurch gelöst, daß die Halteeinrichtung lösbar an der Schraubverbindungseinrichtung angebracht ist.

Erfindungsgemäß bevorzugt ist die Halteeinrichtung an einer Mutter der Schraubverbindungseinrichtung angebracht.

Sie kann durch Klemmen an der Schraubverbindungseinrichtung angebracht sein.

Dabei ist die Klemmkraft erfindungsgemäß weiter bevorzugt eine elastische Rückstellkraft.

Nach einer weiter bevorzugten Ausführungsform der Erfindung weist die Halteeinrichtung einen federnd spannenden Drahtabschnitt zur Anbringung an der Schraubverbindungseinrichtung auf.

Die Halteeinrichtung ist nach einer weiter bevorzugten Ausführungsform der Erfindung nicht nur dazu ausgelegt, das Kabel zu halten, sondern auch dazu, das Kabel zu führen.

Insbesondere nach dieser Ausgestaltung hält die Halteeinrichtung das Kabel in Längsrichtung des Kabels gesehen an mindestens zwei Stellen. Diese beiden Stellen haben einen Abstand von mindestens 1,5 cm voneinander.

Die Halteeinrichtung kann nach einer besonders bevorzugten Ausführungsform der Erfindung an einer den Bremssattel auf der der Bremsscheibe zugewandten Seite verschließenden und eine Funktionsöffnung zum Durchtritt mindestens eines Teils der Zuspanneinrichtung aufweisenden Verschlußplatte angebracht sein. Mit anderen Worten ist nach dieser Ausgestaltung der Erfindung die Halteeinrichtung nicht nur an der Schraubverbindungseinrichtung angebracht, sondern auch an der Verschlußplatte. Dadurch ist eine besonders sichere Halterung gewährleistet.

Die Halteeinrichtung ist erfindungsgemäß weiter bevorzugt einstückig ausgebildet.

Wie die obigen Ausführungen zeigen, ist erfindungsgemäß bevorzugt ein separate und der Kabelführung dienender, vorzugsweise einstückig ausgebildeter Kabelträger mit einem Befestigungsbereich vorgesehen, der zur selbsttragenden Halterung an der Schraubverbindungseinrichtung, insbesondere der Befestigungsmutter geeignet ist.

Dabei erfolgt die Halterung mittels federnd spannender Drahtwindung(en) wie eine Spannklemme und ist selbsttragend, weil die Spannkraft (der Spannbereich) gegen die Mutterkontur wirkt.

Wesentlich ist, daß es für die Kabelführung entlang dem Bremssattel keinerlei Veränderungen des Bremssattels bzw. zusätzlicher Bauteile des Scheibenbremsensystems bedarf. Weiterhin sind keine zusätzlichen Bearbeitungen am Bremssattel erforderlich. Der Befestigungs- bzw. Haltebereich inklusive des sich davon erstreckenden Kabelträgers, der beliebig angepaßt an die Bremssattelkontur ausführbar ist, wird auf die ohnehin vorgesehene Schraubverbindungseinrichtung, insbesondere die Befestigungsmutter aufgesetzt.

Da insgesamt sowohl der klemmende Befestigungsbereich als auch der Kabelträger bevorzugt einstückig und aus Federdraht hergestellt sind, kann entweder durch die Anzahl der Federwindungen, die Formgebung, die Drahtstärke und / oder der Öffnungswinkel eine Federspannung zur kraftschlüssigen Voll- oder Teilumschlingung der Schraubverbindungseinrichtung (Befestigungsmutter) eingestellt werden.

Weil in unmontiertem Zustand die Öffnungsgröße des federelastischen Befestigungsbereichs kleiner als die Außenkontur der Schraubverbindungseinrichtung (Befestigungsmutter) ist, kommt es beim Aufschieben oder Aufsetzen und einer damit verbundenen Aufweitung des Befestigungsbereichs zu einer zu der Kontur der Mutter gerichteten Federvorspannung. Dadurch kommt es je nach Stellung der Befestigungsmutter zu einem Kraftund Formschluß.

Ist der Befestigungsbereich vollumschlingend, so erfolgt nach dessen Aufweitung ein Aufsetzen in Axialrichtung auf die Befestigungsmutter. Bei einer Teilumschlingung von mehr als 180° kann der Befestigungsbereich auch radial auf die Befestigungsmutter gepreßt werden.

Vorzugsweise ist der Befestigungsbereich gegenüber dem länglich ausgelegten Kabelträger derart abgewinkelt, daß sich der Kabelträger entlang der Sattelkontur erstreckt. Dabei ist es gleichgültig, auf welcher Mutter die Befestigung erfolgt. Damit wird je nach Einbau- und Anwendungsfall eine optimale Flexibilität erreicht.

Eine einfache einschlägige Lösung liegt darin, ausgehend vom erfindungsgemäßen teil- oder vollumschlingenden Befestigungsbereich einen ein- und / oder beidseitig verlaufenden Drahtbereich zur Anbindung des Kabels auszubilden. Die Kabelfestlegung kann dann mit wenigstens einem Haltemittel, wie beispielsweise einem Kabelbinder, am Drahtbereich erfolgen. Diese Lösung ist zwar durch Anpassung (Biegen) an die Sattelkontur einfach machbar, erfordert aber im Vergleich mit den im folgenden beschriebenen Ausführungen einen Mehraufwand an Montagezeit und Material (Kabelbinder).

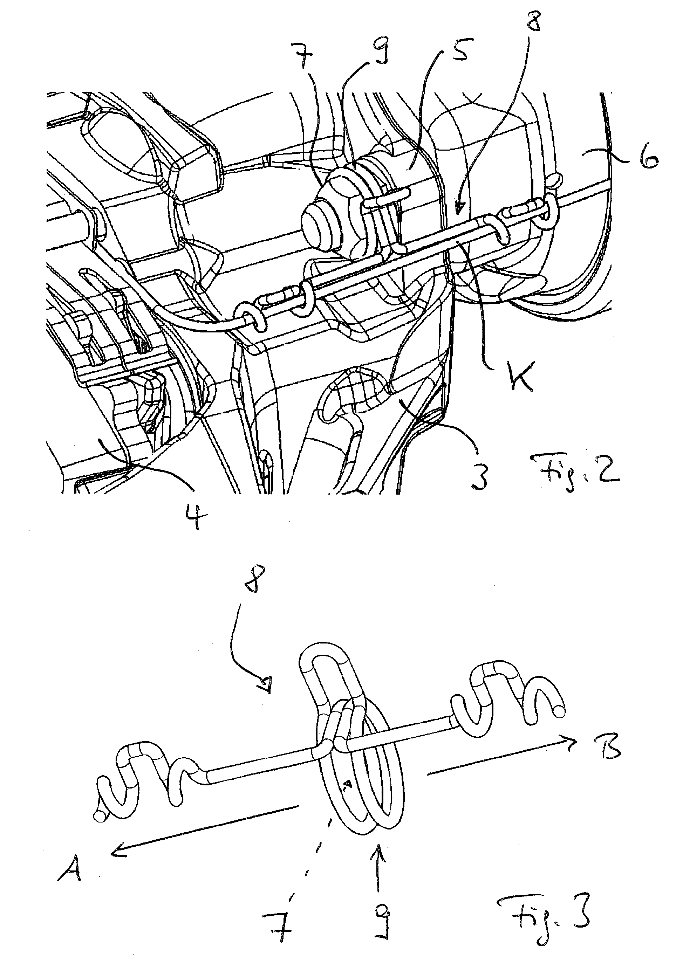

Wie nämlich insbesondere aus den Figuren 2 bis 6 hervorgeht, kann die Formgebung entlang dem Sattel zur Kabelführung - und verbessert gegenüber der soeben genannten Ausführung - vielseitig sein. In jedem Fall erfolgt die Führung nahe und entlang der Sattelstruktur, und somit ohne nachteiligen Mehrbedarf an Bauraum.

Neben dem oben im einzelnen beschriebenen Scheibenbremsensystem schafft die Erfindung auch eine Halteeinrichtung zum Halten eines Kabels eines solchen Scheibenbremsensystems.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: ein Scheibenbremsensystem mit einem Bremssattel und einer Betätigungseinrichtung nach dem Stand der Technik,
- Figur 2: eine Teilansicht aus Figur 1 mit einem ersten Ausführungsbeispiel der Erfindung,
- Figur 3: eine Ausführungsform der erfindungsgemäßen Halteeinrichtung,
- Figur 4: eine Teilansicht aus Figur 1 mit einer zweiten Ausführungsform der Erfindung,
- Figur 5: eine weitere Teilansicht aus Figur 1 mit der weiteren Ausführungsform der Erfindung,
- Figur 6: eine weitere Ausführungsform der erfindungsgemäßen Halteeinrichtung.

Figur 1 zeigt ein Scheibenbremsensystem für Nutzfahrzeuge mit einem Bremssattel 2 und einer pneumatischen und / oder elektromechanischen Betätigungseinrichtung 6. Der Bremssattel 2 umgreift rahmenförmig eine Bremsscheibe 1 und beidseitig der Bremsscheibe 1 liegende aus Reibbelag und Trägerplatte bestehende Bremsbeläge 4. Zum Anpressen der Bremsbeläge 4 an die Bremsscheibe 1 weist der Bremssattel 2 im zuspannseitigen Bremssattelbereich 3 eine nicht gezeigte Zuspanneinrichtung mit einem Drehhebel auf, wodurch sich diesseitig die für die Drehhebelfunktion erforderliche Haubenform an der Sattelkontur ergibt. Endseitig und der Bremsscheibe abgewandt ist am Sattelbereich 3 ein flanschartig verlaufender Haltebereich 5 mit zwei nicht gezeigten Durchgangsöffnungen vorhanden, wobei die Durchgangsöffnungen beidseitig des mittleren Haubenbereiches liegen. Durch diese Öffnungen werden die beiden mit der Betätigungseinrichtung 6, wie beispielsweise einem Betätigungszylinder, verbundenen Schraubbolzen geschoben, und von der anderen Seite mittels Muttern 7 befestigt. Die Muttern 7 liegen damit auf der Seite der Bremsscheibe 1.

Aus Figur 2 sind der Verlauf und die Formgebung des aus Federdraht und vorzugsweise einstückig hergestellten Kabelträgers 8 nach Figur 3 ersichtlich, der mit dem Befestigungsbereich 9 an der Mutter 7 angebracht ist. Zum Aufsetzen und um die federnd verspannende Wirkung zu erzeugen, wird der Befestigungsbereich 9 beispielsweise mittels einer Zange aufgeweitet und axial auf die Mutter 7 aufgesetzt. Wird die Aufweitung entlastet, zieht sich der Befestigungsbereich 9 - wie oben bereits erläutert - zusammen, und der Kabelträger 8 ist positioniert. Dabei ist das wenigstens eine Kabel K des an wenigstens einem Bremsbelag 4 angebrachten Verschleißsensors (nicht gezeigt) mit einer oder mehreren Schutzumhüllungen bereits im Kabelträger 8 eingelegt, oder es erfolgt nachträglich durch Einfädeln in die Ösen bzw. Schlaufen des Kabelträgers 8.

Figur 3 zeigt den Kabelträger 8 mit dem Befestigungsbereich 9, der zur Vollumschlingung der Mutter 7 ausgelegt ist. Dabei kann der Befestigungsbereich 9 je nach Vorspannerfordernis aus einer oder mehreren Drahtwindungen bestehen. Weiterhin kann je nach Erfordernis der Kabelträgerverlauf sich einseitig oder beidseits des Befestigungsbereichs 9 erstrecken, und zwar in gleichen oder unterschiedlichen Längen und in gleichen oder unterschiedlichen Formgebungen, wie dies durch die Bereiche A und B in Figur 3 angedeutet ist.

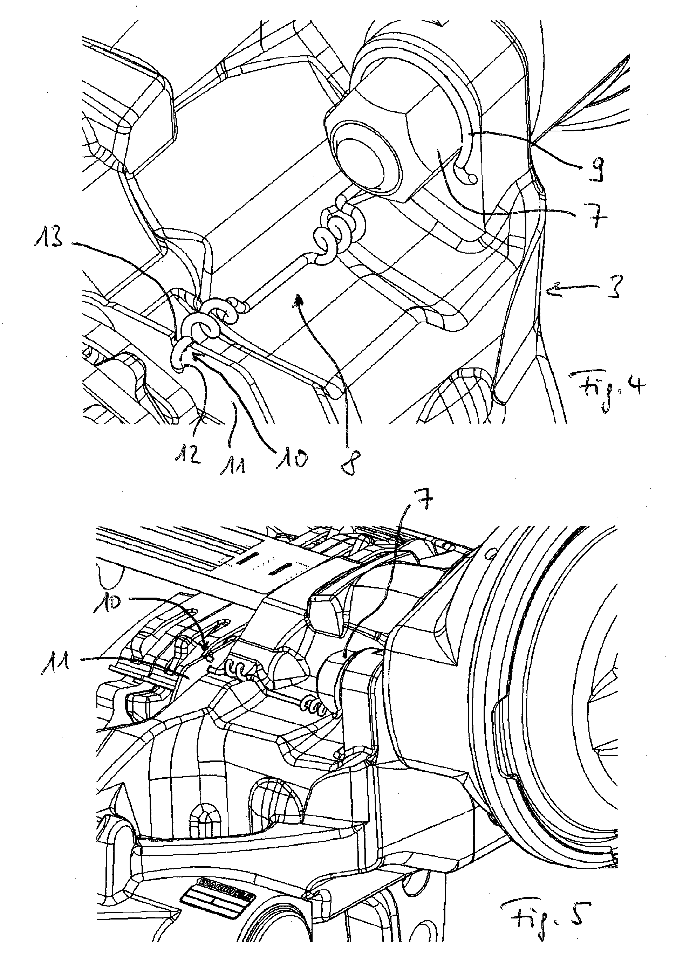

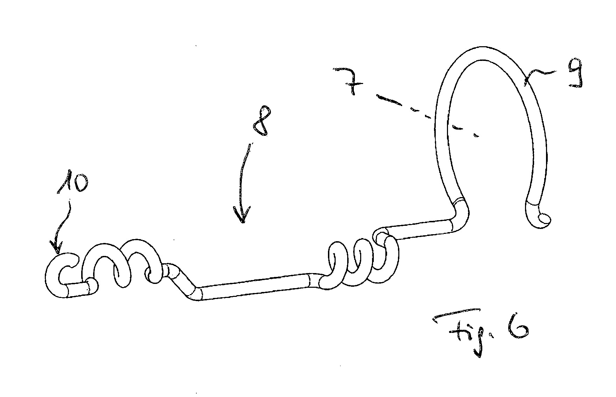

Die Figuren 4 und 5 zeigen ein zweites Ausführungsbeispiel in verschiedenen Ansichten mit dem Kabelträger 8 nach Figur 6. Hier ist der federnd verspannende Befestigungsbereich 9 gegenüber der Mutter 7 offen, so daß er in einer Teilumschlingung von mehr als 180° radial auf die Mutter 7 aufgedrückt werden kann. Auch hier gilt, daß die Teilumschlingung je nach Anforderung an die Spannkraft und in Abhängigkeit der Drahtdicke mittels eines oder mehrerer Bögen hergestellt werden kann.

Auch der Kabelhalter bzw. -träger 8 kann in verschiedensten Weisen ausgeführt sein, was Form, Material und dergleichen angeht. In diesem Zusammenhang wird auf die Erläuterungen zu Figur 3 verwiesen.

Damit die Teilumschlingung verbessert wird, sind in einer den Bremssattel 2 zur Seite der Bremsscheibe 1 verschließenden Verschlußplatte 11 (beispielsweise aus Blech) in deren oberen, den Sattelbereich 3 überstehenden Bereich entsprechende Halteöffnungen 12, 13 eingebracht. Diese Halteöffnungen 12, 13 sind vorzugsweise beidseitig in der Verschlußplatte 11 ausgeführt, also auf jeder Seite der Mutter 7.

Um den Kabelhalter 8 nach Figur 6 mit der / den Öffnung(en) 12, 13 zu koppeln, weist der Kabelhalter 8 ein hakenförmig verlaufendes Drahtende 10 auf. Darüber wird der Kabelhalter 8 zuerst in die Öffnungen 12, 13 eingefädelt, sodann verschwenkt und anschließend über den teilumschlingenden Befestigungsbereich 9 auf die Mutter 7 gedrückt. Wie in den Figuren 4 und 5 erkennbar, weist der Kabelhalter 8 einen entsprechenden Bogen in dem erforderlichen Abstand auf, so daß über diese Abstützung in beide Axialrichtungen auch eine sichere Positionierung gegenüber äußeren Einflüssen, wie beispielsweise Beschleunigungen usw. erzielt wird.

Die obigen Darlegungen beziehen sich auf eine Kopplung des Befestigungsbereichs 9 mit der Mutter 7. Insbesondere dann, wenn die Schraubbolzen über die Mutter 7 überstehen, kann die Kopplung auch mit dem über die Mutter vorstehenden Schraubenbereich erfolgen. Es ist dann aber auf eine sichere Positionierung zu achten, und zwar insbesondere unter Berücksichtung der zur Lagerung erforderlichen Federkräfte mit entsprechender Drahtdicke und entsprechendem Platzbedarf.

Wie aus den Figuren 2 bis 6 ersichtlich, kann die Formgebung entlang dem Sattel zur Kabelführung auf verschiedenste Weise ausgeführt sein.

So sind z.B. Drahtwindungen, offene und zueinander gerichtete Schlaufen, Ösen usw. denkbar, in die das Kabel eingelegt, eingefädelt usw. wird. Daher sind unter Ausnutzung des erfinderischen Grundgedankens vielseitige Freiformen und Gestaltungsmöglichkeiten durch Ausformen des Drahtkörpers gegeben, wobei sich vom Befestigungsbereich 9 auf der Mutter 7 der Kabelträger 8 in zwei Richtungen erstrecken kann, und zwar zur Bremsscheibe 1 und/oder zur Betätigungseinrichtung 6, vgl. die beiden Bereiche A und B in Figur 3.

Damit sich der Kabelträger 8 nach den Figuren 4 bis 6, der die Mutter 7 nur teilumfänglich und spannend umschlingt, nicht beispielsweise durch Beschleunigungen löst, schlägt die Erfindung einen zweiten Befestigungsbereich vor.

Dafür ist nach Figur 6 das zur Bremsscheibe 1 gerichtete Ende des Kabelträgers 8 als Haken/offene Schlaufe 10 ausgebildet.

Die zur Bremsscheibe 1 weisende Seite des Bremssattels 2 wird hier durch die (nur teilweise dargestellte) Verschlußplatte 11 verschlossen, hinter der eine Zuspanneinrichtung im Sattelinneren liegt. Die als Stanz-Biegeteil aus Blech hergestellte Verschlußplatte weist wenigstens eine (nicht gezeigte) Funktionsöffnung zum Durchtritt wenigstens eines Teiles der Zuspannung zur Bremsbetätigung auf und ist Teil des Bremssattels. Die Verschlußplatte dichtet den Sattelinnenraum ab und ist nicht austauschbar.

Im radial äußeren und sich über die Kontur des Bremssattels 2 erstreckenden Verschlußplattenbereich 11 ist / sind eine oder zwei Öffnung(en) 12, 13 eingebracht. Durch diese eine oder zwei Öffnung(en) wird der Haken 10 eingeschwenkt / eingelegt und positioniert, wobei anschließend der federelastische Befestigungsbereich 9 radial auf die Mutter 7 gedrückt wird. Durch den zweiten Befestigungsbereich - hier als Haken 10 - erfolgt auch eine insgesamt einfache und wirkungsvolle Lage- und Verdrehsicherung zur Arretierung des länglich verlaufenden Kabelträgers 8.

Schließt sich an diese Haken 10 in entsprechender Beabstandung verlaufend eine Drahtwindung, eine Drahtausformung usw. an, so stützt sich der montierte Kabelträger 8 auch nochmals in Axialrichtung an der Verschlußplatte 11 ab. Dies verbessert die Positionierung.

Da die Verschlußplatte 11 als Stanz-Biegeteil aus Blech hergestellt ist, können sehr einfach beliebige und der zusätzlichen Kabelträgerhalterung dienende Durchbrüche / Vertiefungen / Schlitze usw. ohne wesentlichen Mehraufwand eingebracht werden. Obwohl hier nur auf einer Seite diese Durchbrüche usw. dargestellt sind, kann dies symmetrisch auch auf der anderen Seite erfolgen. Dadurch wird die Flexibilität nochmals erhöht, wenn der Bedarf besteht, den Kabelträger auf der anderen Sattelseite bzw. an der anderen Mutter zu befestigen.

Wie beispielsweise in Figur 2 dargestellt, ist das Kabel K in den Kabelhalter 8 eingelegt und optimal arretiert. Da der Verlauf / die Formgebung des Kabelträgers 8 auch den Verlauf und die Kabelfestlegung vorgibt, ist eine unsachgemäße und störanfällige Kabelhalterung weitestgehend ausgeschlossen.

Die erfindungsgemäße Halterung des wenigstens einen Kabels kann nicht nur auf Kabel für Verschleißsensoren angewendet werden, sondern auch auf mehrere Kabel von Verschleißsensoren oder auf andere Kabel in Bremssystemen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremsensystem, insbesondere für Nutzfahrzeuge, mit
einem eine Bremsscheibe (1) umgreifenden Bremssattel (2),
einer auf einer Seite der Bremsscheibe im Bremssattel angeordneten Zuspanneinrichtung,
einer Betätigungseinrichtung (6), die mittels einer Schraubverbindungseinrichtung (7) auf der Zuspannseite an dem Bremssattel befestigt ist,
einem an einen Verschleißsensor für einen Bremsbelag angeschlossenen Kabel (K) und
einer Halteeinrichtung (8) zum Halten des Kabels an dem zuspannseitigen Bereich (3) des Bremssattels,
**dadurch gekennzeichnet, daß**
die Halteeinrichtung (8) lösbar an der Schraubverbindungseinrichtung angebracht ist.

2. Scheibenbremsensystem nach Anspruch 1, **dadurch gekennzeichnet, daß** die Halteeinrichtung (8) an einer Mutter der Schraubverbindungseinrichtung (7) angebracht ist.

3. Scheibenbremsensystem nach Anspruch 1 oder 2, **dadurch gekennzeichnet, daß** die Halteeinrichtung (8) durch Klemmen an der Schraubverbindungseinrichtung (7) angebracht ist.

4. Scheibenbremsensystem nach Anspruch 3, **dadurch gekennzeichnet, daß** die Klemmkraft eine elastische Rückstellkraft ist.

5. Scheibenbremsensystem nach einem der vorangehenden Ansprüche, **dadurch gekennzeichnet, daß** die Halteeinrichtung (8) einen federnd spannenden Drahtabschnitt (9) zur Anbringung an der Schraubverbindungseinrichtung (7) aufweist.

6. Scheibenbremsensystem nach einem der vorangehenden Ansprüche, **dadurch gekennzeichnet, daß** die Halteeinrichtung (8) das Kabel (K) nicht nur hält, sondern auch führt.

7. Scheibenbremsensystem nach einem der vorangehenden Ansprüche, **dadurch gekennzeichnet, daß** die Halteeinrichtung (8) das Kabel (K) in Längsrichtung des Kabels gesehen an mindestens zwei Stellen hält.

8. Scheibenbremsensystem nach einem der vorangehenden Ansprüche, **dadurch gekennzeichnet, daß** die Halteeinrichtung (8) an einer den Bremssattel (2) auf der der Bremsscheibe (1) zugewandten Seite verschließenden und eine Funktionsöffnung zum Durchtritt mindestens eines Teils der Zuspanneinrichtung aufweisenden Verschlußplatte (11) angebracht ist.

9. Scheibenbremsensystem nach einem der vorangehenden Ansprüche, **dadurch gekennzeichnet, daß** die Halteeinrichtung (8) einstückig ausgebildet ist.

10. Halteeinrichtung eines Scheibenbremsensystems nach einem der vorangehenden Ansprüche,
**dadurch gekennzeichnet, daß**
sie einen federnd spannenden Drahtabschnitt (9) zur Anbringung an einer der Befestigung einer Betätigungseinrichtung (6) auf der Zuspannseite an einem Bremssattel (2) dienenden Schraubverbindungseinrichtung (7) aufweist, der in angebrachtem Zustand die Schraubverbindung zumindest teilweise umschlingt.

## Claims

1. Disc brake system, in particular for commercial vehicles, having
a brake calliper (2) which reaches around a brake disc (1),
a brake application device which is arranged on one side of the brake disc in the brake calliper,
an actuating device (6) which is fastened to the brake calliper by means of a screw connection device (7) on the brake application side,
a cable (K) which is connected to a wear sensor for a brake pad, and
a holding device (8) for holding the cable on the brake application-side region (3) of the brake calliper, **characterized in that**
the holding device (8) is attached releasably to the screw connection device.

2. Disc brake system according to Claim 1, **characterized in that** the holding device (8) is attached to a nut of the screw connection device (7).

3. Disc brake system according to Claim 1 or 2, **characterized in that** the holding device (8) is attached to the screw connection device (7) by way of clamping.

4. Disc brake system according to Claim 3, **characterized in that** the clamping force is an elastic restoring force.

5. Disc brake system according to one of the preceding claims, **characterized in that** the holding device (8) has a resiliently stressing wire section (9) for attachment to the screw connection device (7).

6. Disc brake system according to one of the preceding claims, **characterized in that** the holding device (8) not only holds but also guides the cable (K).

7. Disc brake system according to one of the preceding claims, **characterized in that** the holding device (8) holds the cable (K) at at least two locations as viewed in the longitudinal direction of the cable.

8. Disc brake system according to one of the preceding claims, **characterized in that** the holding device (8) is attached to a closure plate (11) which closes the brake calliper (2) on the side facing the brake disc (1) and has a functional opening for the passage of at least part of the brake application device.

9. Disc brake system according to one of the preceding claims, **characterized in that** the holding device (8) is configured in one piece.

10. Holding device of a disc brake system according to one of the preceding claims, **characterized in that** it has a resiliently stressing wire section (9) for attachment to a screw connection device (7) which serves to fasten an actuating device (6) on the brake application side to a brake calliper (2) and wraps around the screw connection at least partially in the attached state.

## Revendications

1. Système de frein à disque, en particulier pour véhicule utilitaire, comprenant
un étrier de frein (2) venant en prise autour d'un disque de frein (1),
un dispositif de serrage disposé d'un côté du disque de frein dans l'étrier de frein,
un dispositif d'actionnement (6) qui est fixé à l'étrier de frein au moyen d'un dispositif de connexion à vis (7) sur le côté de serrage,
un câble (K) raccordé à un capteur d'usure pour une garniture de frein et
un dispositif de retenue (8) pour retenir le câble à la région (3) de l'étrier de frein du côté de serrage,
**caractérisé en ce que**
le dispositif de retenue (8) est monté de manière détachable au dispositif de connexion par vissage.

2. Système de frein à disque selon la revendication 1, **caractérisé en ce que** le dispositif de retenue (8) est monté sur un écrou du dispositif de connexion à vis (7).

3. Système de frein à disque selon la revendication 1 ou 2, **caractérisé en ce que** le dispositif de retenue (8) est monté par serrage au dispositif de connexion à vis (7).

4. Système de frein à disque selon la revendication 3, **caractérisé en ce que** la force de serrage est une force de rappel élastique.

5. Système de frein à disque selon l'une quelconque des revendications précédentes, **caractérisé en ce que** le dispositif de retenue (8) présente une portion de fil métallique (9) effectuant un serrage élastique en vue du montage sur le dispositif de connexion à vis (7).

6. Système de frein à disque selon l'une quelconque des revendications précédentes, **caractérisé en ce que** le dispositif de retenue (8) non seulement retient le câble (K), mais le guide également.

7. Système de frein à disque selon l'une quelconque des revendications précédentes, **caractérisé en ce que** le dispositif de retenue (8) retient le câble (K), vu dans la direction longitudinale du câble, en au moins deux endroits.

8. Système de frein à disque selon l'une quelconque des revendications précédentes, **caractérisé en ce que** le dispositif de retenue (8) est disposé au niveau d'une plaque de fermeture (11) fermant l'étrier de frein (2) du côté tourné vers le disque de frein (1) et présentant une ouverture fonctionnelle pour le passage d'au moins une partie du dispositif de serrage.

9. Système de frein à disque selon l'une quelconque des revendications précédentes, **caractérisé en ce que** le dispositif de retenue (8) est réalisé d'une seule pièce.

10. Dispositif de retenue d'un système de frein à disque selon l'une quelconque des revendications précédentes,
**caractérisé en ce**
**qu'**il présente une portion de fil métallique (9) effectuant un serrage élastique en vue du montage sur un dispositif de connexion à vis (7) servant à la fixation d'un dispositif d'actionnement (6) à un étrier de frein (2) sur le côté de serrage, laquelle entoure au moins en partie la connexion à vis dans l'état monté.
